# FASCICULE DE BREVET EUROPEEN

(11) **EP 2 047 123 B1**
(45) Date de publication et mention de la délivrance du brevet: **15.06.2011**
(21) Numéro de dépôt: 07823362.4
(22) Date de dépôt: 27.07.2007
(51) Int. Cl.: F16B 5/12

(54) **CLIP DE FIXATION A DEUX POSITIONS DE MAINTIEN NOTAMMENT POUR BAGUETTES DE CARROSSERIE AUTOMOBILE**
BEFESTIGUNGSKLAMMER MIT ZWEI SICHERUNGSPOSITIONEN, INSBESONDERE FÜR VERKLEIDUNGSSTREIFEN EINES KRAFTFAHRZEUGRAHMENS
FASTENING CLIP WITH TWO SECURING POSITIONS PARTICULARLY FOR MOTOR VEHICLE BODYWORK TRIM STRIPS

(30) Priorité: 28.07.2006 FR 0606932
(43) Date de publication de la demande: 15.04.2009
(73) Titulaire: Rehau SA, 57340 Morhange (FR)
(72) Inventeur: HAUDRY, Philippe, F-57670 Lening (FR); MULLER, Denis, F-57450 Henriville (FR)
(74) Mandataire: Metz, Paul
(86) Numéro de dépôt international: PCT/FR2007/001305
(87) Numéro de publication internationale: WO 2008/012449

(56) Documents cités:
- EP-A1- 1 526 040
- FR-A1- 2 747 435

## Description

La présente invention concerne un clip de fixation à deux positions de maintien ou de retenue, destiné principalement aux baguettes, moulures, enjoliveurs de ceinture de caisse ou de bas de caisse pour véhicules routiers notamment du type automobile (EP 15260407).

L'invention se rapporte également à une baguette de protection ou d'enjolivement ou à tout autre élément à rapporter sur la carrosserie d'un véhicule routier notamment du type automobile, comportant de tels clips de fixation à deux positions.

Les baguettes de protection ou d'enjolivement de ce type sont des pièces en matière plastique réalisées par moulage par injection, conçues pour être montées fixes sur la carrosserie d'un véhicule.

Dans la pratique actuelle, ces baguettes de protection ou d'enjolivement sont peintes après moulage, sur leur lieu de fabrication ou chez un sous-traitant au moyen d'une ligne spécifique de mise en peinture.

Les baguettes sont alors livrées finies sur le site d'assemblage où elles sont montées sur le support correspondant, généralement la carrosserie d'une voiture, préalablement traité et peint de manière indépendante.

Cette façon de faire est particulièrement onéreuse, car elle nécessite une opération de peinture indépendante de celle du support (« off line ») et une logistique importante pour la mettre en oeuvre et pour fournir dans le bon ordre, des baguettes de la bonne couleur, au niveau de la chaîne d'assemblage.

En outre, il arrive parfois que, malgré une opération préalable, longue et délicate, de mise au point et d'harmonisation des teintes, la baguette et son support, qui sont peints séparément et selon des techniques différentes, présentent des teintes légèrement différentes. De tels écarts peuvent par exemple provenir de faibles différences d'épaisseur des couches de peinture ou de l'emploi de gammes de peinture spécifiques pas exactement identiques.

Ce désaccord de teinte, minime lorsque les pièces sont regardées séparément, devient très visible lorsqu'elles sont montées l'une sur l'autre. Un tel défaut d'esthétique n'est actuellement plus acceptable par les constructeurs automobiles.

Le but de l'invention est de proposer une baguette de protection, d'enjolivement ou autre qui peut être montée sur la carrosserie avant que cette dernière ne subisse les différentes opérations de traitement et de peinture.

La baguette peut ainsi être traitée et peinte en même temps que la carrosserie sur laquelle elle est montée (« on line » ou « in line »). Un tel procédé est nettement plus économique, car il supprime la nécessité d'une ligne spécifique supplémentaire de mise en peinture pour les baguettes. De plus, il assure une parfaite harmonie des teintes entre la carrosserie et la baguette.

Dans le cas d'un traitement « on line », la baguette est montée sur la carrosserie avant le traitement anti-corrosion de la carrosserie par cataphorèse, alors que dans le cas d'un traitement « in line », la baguette est montée sur la carrosserie après ce traitement anti-corrosion mais avant les opérations de mise en peinture de finition (base métallisée ou laque, puis vernis) ; ces couches de finition étant préférentiellement appliquées par pulvérisation électrostatique de la peinture.

Cependant, pour que cette technique soit envisageable, la baguette ne doit pas gêner par sa présence les différentes opérations de traitement et de peinture de la carrosserie, notamment sur la partie de carrosserie se trouvant à proximité de la baguette ou masquée à l'arrière de celle-ci.

Pour cela, la baguette doit pouvoir être prémontée fixe sur la carrosserie à une certaine distance de celle-ci de manière que la baguette, ainsi que la totalité de la surface de la carrosserie puissent subir les opérations de traitement, notamment la cataphorèse, et puissent être revêtues de peinture, de laque et/ou de vernis.

En outre, cette baguette doit être capable de supporter sans détérioration les conditions parfois sévères de traitement de la carrosserie, la cataphorèse impliquant notamment un passage au four à une température de l'ordre de 200°C.

Elle doit ensuite pouvoir être placée facilement et rapidement en position finale d'utilisation, c'est-à-dire plaquée contre la carrosserie, avec un maintien suffisant pour résister aux conditions de roulage et aux efforts mécaniques divers auxquels elle peut être exposée par la suite, par exemple le frottement de rouleaux de lavage.

Par la demande FR 2.839.481 au nom d'ARIES, on connaît une baguette destinée à être montée sur la carrosserie d'un véhicule automobile qui répond à ce problème technique. Sur sa face interne, cette baguette comporte d'une part deux organes de prémontage coopérant avec des orifices spécifiques de la carrosserie qui permettent de maintenir la baguette dans une position écartée de son support. Elle comporte d'autre part une série de clips de blocage, coopérant avec un autre type d'orifices de la carrosserie, de manière à assurer la fixation de la baguette en position finale de verrouillage contre la carrosserie après avoir subi une poussée perpendiculaire au support.

Les deux organes de prémontage de cette réalisation antérieure sont formés chacun d'une pièce d'emboîtement préalablement mise en place sur l'orifice correspondant de la carrosserie, et d'une seconde pièce cylindrique rattachée à la baguette, susceptible de coulisser dans la pièce d'emboîtement et comportant en extrémité un ergot destiné à coopérer avec un creux de la pièce d'emboîtement.

Avant les opérations de peinture, on monte cette baguette sur la carrosserie en position écartée. Pour cela, l'opérateur insère la partie cylindrique de chacun des organes de prémontage dans la pièce d'emboîtement correspondante et exerce sur la baguette une poussée perpendiculaire à la carrosserie, dite « en Y » jusqu'à ce que l'ergot des parties cylindriques se bloque dans les creux correspondants des deux pièces d'emboîtement.

Une fois les opérations de peinture terminées, l'opérateur exerce une seconde poussée perpendiculaire à la carrosserie qui provoque la sortie des ergots de prémontage hors de leur logement et l'insertion des clips de blocage dans les orifices correspondants de la carrosserie, de manière à placer la baguette en position finale de verrouillage contre la carrosserie.

Une telle réalisation permet de répondre au problème technique. Cependant, en position écartée de prémontage, la baguette ARIES n'est soutenue sur toute sa longueur, qu'à deux endroits correspondant à l'emplacement des organes de prémontage. Ce maintien est assez limité et peut parfois s'avérer insuffisant par exemple lors du passage dans le bain de cataphorèse où la baguette peut se décrocher du fait des remous engendrés par le déplacement de la voiture dans le bain ou alors dans le four de cataphorèse où la baguette, insuffisamment maintenue, peut s'affaisser entre les deux points de fixation.

En outre, pour placer la baguette en position écartée de prémontage, puis pour la mettre en position plaquée de verrouillage, l'opérateur doit effectuer dans les deux cas un mouvement de même nature : une poussée « en Y » perpendiculaire au support.

L'opérateur doit donc, lors du prémontage, doser son effort de poussée pour que les parties cylindriques des organes de prémontage ne coulissent pas trop loin dans les pièces d'emboîtement et que les ergots des parties cylindriques ne dépassent pas leur position de réception dans les creux des pièces d'emboîtement.

Cette opération étant relativement délicate et menée à une cadence très rapide, il arrive que certaines baguettes se retrouvent trop près de la carrosserie. La présence de la baguette gêne alors les opérations ultérieures de traitement de la zone de carrosserie située derrière et empêche une pulvérisation correcte des différentes couches de peinture.

Le but de l'invention est de fournir une autre solution, plus avantageuse, pour résoudre ce problème technique.

Pour résoudre ce problème technique, l'invention fournit un clip de fixation destiné à assurer la fixation sur un support et plus particulièrement sur la carrosserie d'un véhicule routier notamment du type automobile, d'un élément linéaire décoratif et/ou fonctionnel, par exemple du type baguette, bande, moulure, enjoliveur de ceinture de caisse ou de bas de caisse.

Ce clip de fixation comprend une pièce de base rapportée sur ou moulée d'une pièce avec la face intérieure de l'élément linéaire.

Il comprend également un élément d'accrochage indépendant, destiné à être rapporté sur la pièce de base. Cet élément d'accrochage comporte une structure saillante d'accrochage appelée tête de clip conçue pour coopérer avec une ouverture de montage du type en « trou de serrure », ménagée en regard dans le support.

Le clip de fixation comporte en outre une platine d'étanchéité destinée à obturer l'ouverture de montage lorsque l'élément linéaire est en position finale d'utilisation. Cette platine d'étanchéité permet ainsi par exemple de limiter l'entrée d'eau et de saletés à l'intérieur de la carrosserie et d'atténuer la transmission du bruit de roulage.

Selon l'invention, la pièce de base comporte un moyen de retenue destiné à coopérer avec un moyen de retenue complémentaire porté par l'élément d'accrochage. Ces deux moyens de retenue constituent ensemble une structure de fixation à deux positions de maintien, préférentiellement une structure d'encliquetage à deux crans successifs, permettant de solidariser l'élément d'accrochage sur la pièce de base à deux hauteurs différentes, se traduisant par deux positions de montage de l'élément linéaire sur son support obtenues par deux mouvements de nature différente de l'élément linéaire par rapport au support : une position écartée de prémontage à distance du support, obtenue par un mouvement de coulissement longitudinal et une position de verrouillage plaquée contre le support, correspondant à sa position finale d'utilisation et obtenue au moyen d'une poussée transversale sensiblement perpendiculaire au support.

Selon une autre caractéristique essentielle de l'invention, la platine d'étanchéité est portée par la pièce de base et se trouve ainsi à distance du support dans la position écartée de prémontage et en contact avec celui-ci dans la position de verrouillage.

L'invention fournit également un élément linéaire décoratif ou fonctionnel, par exemple du type baguette, bande, moulure, enjoliveur de ceinture de caisse ou de bas de caisse, destiné à être rapporté contre et monté sur un support et plus particulièrement la carrosserie d'un véhicule routier notamment du type automobile, qui comporte sur sa face intérieure au moins un clip de fixation à deux positions de maintien selon l'invention.

Grâce à leurs deux positions de maintien, les clips de fixation selon l'invention, répartis sur toute la baguette, assurent à la fois le prémontage de la baguette en position écartée et le verrouillage final de celle-ci en position plaquée contre son support. Quelle que soit sa position de montage, la baguette selon l'invention est donc supportée par l'ensemble des clips de fixation, sur toute sa longueur.

Avantageusement, le prémontage de la baguette s'effectue au moyen d'un mouvement de coulissement longitudinal, c'est-à-dire au moyen d'un mouvement de translation dit « en X », alors que le montage final en position plaquée de verrouillage requiert une poussée transversale en « Y » perpendiculaire au support. Ces deux mouvements bien distincts évitent tout risque d'erreur de la part de l'opérateur.

En outre, grâce à la conception particulièrement inventive du clip selon l'invention, le coulissement longitudinal de prémontage s'effectue à une distance fixe par rapport au support, déterminée par construction et optimale pour réaliser les opérations ultérieures de traitement et de peinture.

La platine d'étanchéité, portée par la pièce de base du clip de fixation selon l'invention, peut parfaitement remplir sa fonction d'étanchéité en position finale de montage de l'élément linéaire, à savoir en position plaquée de verrouillage correspondant à la position d'utilisation. Cependant, la platine d'étanchéité se trouvant à distance du support en position écartée de prémontage, sa présence ne gêne en aucune façon les opérations ultérieures de traitement et de peinture du support.

Les produits de traitement et/ou de peinture peuvent ainsi être appliqués sur sensiblement toute la superficie du support car la surface de contact entre le support et le clip de fixation selon l'invention est extrêmement réduite en position écartée de prémontage.

La pièce de base du clip de fixation selon l'invention est de préférence une pièce moulée indépendamment et rapportée ensuite sur la face intérieure de la baguette et plus généralement de l'élément linéaire.

Elle peut avantageusement être montée par clipsage sur deux nervures longitudinales s'étendant sur la face arrière de l'élément linéaire, ce qui autorise une translation du clip en cas de dilatation de l'élément linéaire différente de celle du support.

D'autres caractéristiques et avantages de l'invention apparaîtront à la lecture de la description détaillée qui va suivre, description faite en référence aux dessins annexés, dans lesquels :
- la figure 1 est une vue générale en perspective de la face intérieure d'un tronçon de baguette équipé de clips de fixation à deux positions de maintien selon l'invention ;
- la figure 2 est une vue latérale en perspective de la pièce de base d'un clip de fixation selon l'invention, représentée seule et destinée à être rapportée sur la face intérieure d'une baguette ;
- la figure 3 est une vue de face en perspective de la pièce de base de la figure 2 ;
- la figure 4 est une vue de dessus en perspective de l'élément d'accrochage d'un clip de fixation selon l'invention, représenté seul et destiné à coopérer avec la pièce de base de la figure 2 ;
- la figure 5 est une vue latérale en perspective de l'élément d'accrochage de la figure 4 ;
- la figure 6 est une vue de dessous en perspective de l'élément d'accrochage de la figure 4 ;
- la figure 7 est une vue arrière en perspective de l'élément d'accrochage de la figure 4 ;
- la figure 8 est une vue en perspective éclatée d'un clip de fixation à deux positions de maintien selon l'invention, l'élément d'accrochage étant positionné au-dessus de la pièce de base sur laquelle il doit être monté ;
- la figure 9 est une vue en perspective d'un clip de fixation selon l'invention en position écartée de prémontage, l'élément d'accrochage se trouvant en position haute sur la pièce de base ;
- la figure 10 est une vue en coupe longitudinale d'un clip de fixation selon l'invention monté en position écartée de prémontage sur son support, de préférence la carrosserie d'un véhicule ;
- la figure 11 est une vue en perspective d'un clip de fixation selon l'invention en position plaquée de verrouillage, l'élément d'accrochage se trouvant en position basse sur la pièce de base ;
- la figure 12 est une vue en coupe longitudinale d'un clip de fixation selon l'invention monté en position plaquée de verrouillage sur son support, de préférence la carrosserie d'un véhicule ;
- les figures 13, 14 et 15 sont des vues respectivement en perspective éclatée, en coupe longitudinale en position écartée de prémontage et en coupe longitudinale en position plaquée de verrouillage, d'une deuxième variante du clip de fixation à deux positions selon l'invention ;
- les figures 16, 17 et 18 sont des vues respectivement en perspective éclatée, en coupe longitudinale en position écartée de prémontage et en coupe longitudinale en position plaquée de verrouillage, d'une troisième variante du clip de fixation à deux positions selon l'invention ;
- les figures 19, 20 et 21 sont des vues respectivement en perspective éclatée, en coupe longitudinale en position écartée de prémontage et en coupe longitudinale en position plaquée de verrouillage, d'une quatrième variante du clip de fixation à deux positions selon l'invention.

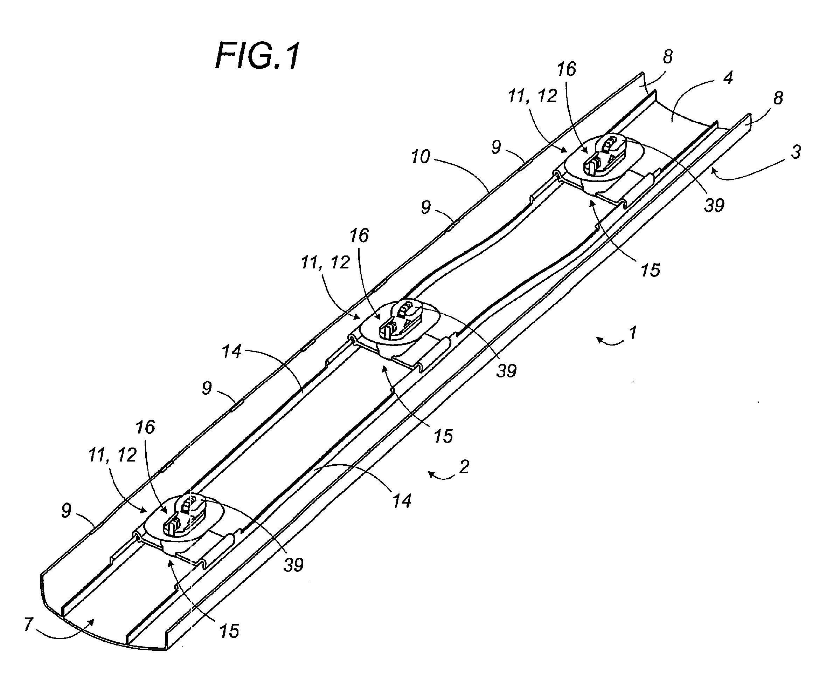

La baguette et le clip de fixation selon la présente invention vont maintenant être décrits de façon détaillée en référence aux figures 1 à 21. Les éléments équivalents représentés sur les différentes figures porteront les mêmes références numériques.

La présente invention se rapporte de façon générale à un élément linéaire à fixer sur un support et plus particulièrement sur la carrosserie d'un véhicule routier.

Par élément linéaire on entend plus particulièrement tout élément décoratif et/ou fonctionnel par exemple du type baguette, bande, moulure et autre que l'on fixe sur les portes, les ceintures de caisse, les bas de caisse ou autres parties de la carrosserie d'un véhicule routier. Pour des raisons de commodité on regroupera tous ces objets par le seul terme de baguette.

De la même façon, cet élément linéaire peut être rapporté et fixé sur tout support présentant les orifices appropriés. Cependant, l'application préférentielle visée concernant la carrosserie d'un véhicule, ce support sera désigné par la suite par le terme de carrosserie.

Sur les différentes figures, on a représenté des clips de fixation et une baguette constituant des modes de réalisation préférentiels de l'invention. En effet, les clips de fixation représentés sur les figures et décrits dans la suite de la demande sont des clips rapportés sur la baguette et qui présentent une tête de clip de forme générale en « U couché ». Il doit cependant être bien compris que ces figures ainsi que la description détaillée de celles-ci ne sont données qu'à titre d'exemple et ne sont en rien limitatives de la portée de l'invention définie par les revendications. Ainsi, la pièce de base du clip selon l'invention pourrait aussi bien être intégrée à la face arrière de la baguette, c'est-à-dire moulée d'une pièce avec celle-ci, et la tête de clip pourrait présenter toute autre forme appropriée pour coopérer avec l'ouverture correspondante de la carrosserie.

Par convention dans cette description, on désignera par faces avant et arrière du clip les faces de celui-ci dirigées respectivement vers la partie étroite et vers la partie large de l'ouverture en forme de trou de serrure; lorsque le clip est monté sur la carrosserie. Les notions de haut et de bas seront définies en fonction de l'orientation du clip tel que représenté sur les figures.

Sur la figure 1, un tronçon 1 d'une baguette 2 selon l'invention a été représenté.

Ce tronçon 1 de baguette 2 se présente sous la forme d'une pièce allongée qui comporte deux faces, une face extérieure 3 visible lorsque la baguette est montée, par exemple bombée convexe, et une face intérieure 4, par exemple concave, appliquée contre un support récepteur 5 par exemple la tôle d'une carrosserie 6.

Le corps de la baguette 2 définit ainsi du côté de sa face intérieure 4 un espace intérieur creux 7 longitudinal, continu et ouvert, destiné à être placé en direction du support 5, préférentiellement la carrosserie 6 d'un véhicule.

De manière classique, l'espace creux 7 est limité sur les côtés par deux rebords 8 longitudinaux, sensiblement verticaux ou obliques selon les exigences de style.

Sur l'exemple de réalisation représenté, le rebord 8 destiné à être orienté vers le bas lorsque la baguette est montée sur la carrosserie comporte des saillies 9 réparties sur son chant 10. Ces saillies 9 maintiennent le rebord 8 légèrement écarté de la paroi de carrosserie 6 permettant un écoulement de l'eau vers le bas et hors de la baguette.

La baguette 2 comporte sur sa face intérieure 4 des moyens de fixation 11 de la baguette 2 sur le support 5. Selon l'invention, ces moyens de fixation 11 sont des clips de fixation à deux positions 12.

Pour assurer le montage et la fixation de la baguette 2 sur le support 5, ces clips de fixation 12 sont conçus pour coopérer avec une série d'ouvertures 13 prévues en regard dans le support 5, préférentiellement la tôle de la carrosserie 6 notamment au niveau des portes ou des bas de caisse.

De façon connue, la forme de ces ouvertures 13 est du type en « trou de serrure ». Elles présentent ainsi une zone large sensiblement rectangulaire, prolongée par une zone plus étroite.

Les clips de fixation 12 existent en plusieurs endroits, de préférence sur sensiblement toute la longueur du corps de la baguette 2 de manière à garantir un maintien uniforme et solide de la pièce moulée contre le support 5. Ils sont disposés selon un espacement prédéterminé correspondant à celui des ouvertures 13 avec lesquelles ils se retrouvent en vis-à-vis lorsque la baguette est positionnée contre son support 5.

Selon un mode de réalisation préférentiel de l'invention, la baguette comporte sur sa face intérieure 4 deux nervures longitudinales 14, sensiblement parallèles, qui se prolongent de préférence sensiblement sur toute la longueur de la baguette. Ces nervures longitudinales 14 sont préférentiellement minces afin d'éviter de provoquer des retassures sur l'autre face.

Selon le mode de réalisation préférentiel représenté, les clips de fixation 12 sont rapportés et assemblés par clipsage sur ces deux nervures 14. Ils peuvent ainsi se déplacer légèrement en translation afin de compenser les phénomènes de différence de dilatation entre la baguette et la carrosserie.

Sur la figure 1, on a représenté des clips de fixation 12 positionnés de manière équidistante le long des nervures 14. Néanmoins, suivant les modèles de baguette 2 et les possibilités d'ouvertures 13 dans le support 5, ces clips 12 peuvent être disposés différemment.

Selon une caractéristique essentielle de l'invention, chaque clip de fixation 12 est constitué de deux pièces indépendantes, destinées à être solidarisées l'une à l'autre.

Le clip de fixation 12 comporte d'une part une pièce de base 15, moulée d'une pièce avec ou rapportée sur la face intérieure 4 de la baguette 2, et d'autre part un élément d'accrochage 16, indépendant de la pièce de base 15 et destiné à être rapporté sur cette pièce de base 15.

Selon une caractéristique essentielle de l'invention, l'élément d'accrochage 16 peut être monté sur la pièce de base 15 à deux hauteurs différentes, ce qui se traduit par deux positions distinctes du clip de fixation 12.

Selon le mode de réalisation préférentiel représenté, la pièce de base 15 est moulée indépendamment et rapportée sur la face intérieure 4 de la baguette 2.

La pièce de base 15 comporte préférentiellement un plan de base 17, de préférence terminé de chaque côté par une rainure 18 ouverte vers le bas et destinée à recevoir l'extrémité des nervures 14 de la baguette 2. Chaque rainure 18 présente pour cela une conformation d'accrochage 19 adaptée, susceptible de coopérer avec la nervure 14 correspondante afin d'assurer la fixation du clip 12 sur la baguette.

Le plan de base 17 peut être sensiblement horizontal ou incliné comme représenté afin de s'adapter à la hauteur des nervures 14 qui ne sont pas forcément identiques, ou à un changement d'inclinaison de la carrosserie en regard de la baguette.

Selon d'autres variantes envisageables, les pièces de base 15 des clips de fixation 12 ou certaines d'entre elles peuvent s'élever directement de la face intérieure 4 de la baguette 2 ou être rapportées sur des conformations quelconques de forme appropriée, différentes des nervures 14.

La pièce de base 15 comporte de préférence une paroi 20, préférentiellement sensiblement plane et verticale, s'élevant du plan de base 17 et s'étendant longitudinalement par exemple en position médiane.

Cette paroi 20 sert de support à une platine d'étanchéité 21 et présente une hauteur suffisante pour maintenir la platine d'étanchéité 21 et l'élément d'accrochage 16, une fois celui-ci fixé, à distance de la face intérieure 4 de la baguette d'une valeur rattrapant la flèche de concavité de la baguette 2 en vue de permettre l'accrochage sur la tôle de la carrosserie 6.

La platine d'étanchéité 21 est destinée à obturer l'ouverture 13 de carrosserie lorsque la baguette est en place, afin de limiter l'entrée d'eau et de saletés à l'intérieur de la carrosserie et d'atténuer la transmission du bruit de roulage.

Cette platine 21, de préférence sensiblement parallèle à la baguette, est préférentiellement de forme sensiblement ovale, rectangulaire, ou intermédiaire entre ces deux formes. Elle peut être sensiblement plane ou présenter, comme représenté, un rebord périphérique remontant 22 dirigé vers l'ouverture 13.

Au-dessus de la platine d'étanchéité 21 s'élève un moyen de retenue 23 destiné à coopérer avec un moyen de retenue 24 complémentaire porté par l'élément d'accrochage 16, de manière à assurer la fixation de l'élément d'accrochage 16 sur la pièce de base 15.

Ces deux moyens de retenue 23 et 24 constituent ensemble une structure de fixation à deux positions 25 permettant de solidariser l'élément d'accrochage 16 sur la pièce de base 15 à deux hauteurs différentes.

La structure de fixation à deux positions 25 est de préférence une structure d'encliquetage à deux crans successifs dont un exemple est décrit ci-dessous en référence aux figures annexées. L'invention n'est cependant pas limitée à cette variante, la structure de fixation pouvant adopter toute autre forme appropriée du moment qu'elle autorise ces deux positions de fixation.

Dans la variante représentée sur les figures 1 à 12, le moyen de retenue 23 de la pièce de base 15 comprend au moins un et de préférence deux éléments d'encliquetage 26 et 27 de type sapin, c'est-à-dire formé d'un plot par exemple sensiblement parallélépipédique, respectivement 28 et 29, comportant en partie supérieure une saillie 30, 31 de forme sensiblement triangulaire à rampe supérieure progressive 32, 33 et à sous-face plane d'appui 34, 35.

Ces éléments d'encliquetage 26 et 27 sont préférentiellement disposés en regard l'un de l'autre, leurs saillies triangulaires 30 et 31 se faisant face.

La pièce de base 15 représentée comporte également, un élément de guidage 36 de préférence sensiblement parallélépipédique et présentant un ergot 37 saillant destinée à coopérer avec une rainure de l'élément d'accrochage 16.

Cet élément de guidage est de préférence situé à l'avant de l'élément d'encliquetage 26, son ergot 37 dépassant préférentiellement de sa face avant, c'est-à-dire du côté opposé à la saillie triangulaire 30 de l'élément d'encliquetage 26.

Cette pièce de base 15 comporte en outre un plot anti-recul 38, par exemple sensiblement parallélépipédique, qui constitue une butée arrière pour le clip 12 une fois celui-ci mis en place dans l'ouverture 13 en forme de trou de serrure du support 5. En venant buter contre le bord arrière de l'ouverture 13, le plot anti-recul 38, situé à l'arrière des éléments d'encliquetage 26 et 27, s'oppose au recul du clip vers la partie large de l'ouverture 13 en trou de serrure qui pourrait conduire au délogement du clip 12 hors de l'ouverture 13 et par là à la chute de la baguette 2.

Le clip de fixation 12 selon l'invention comporte également un élément d'accrochage 16, moulé indépendamment de la pièce de base 15 et destiné à être rapporté sur celle-ci.

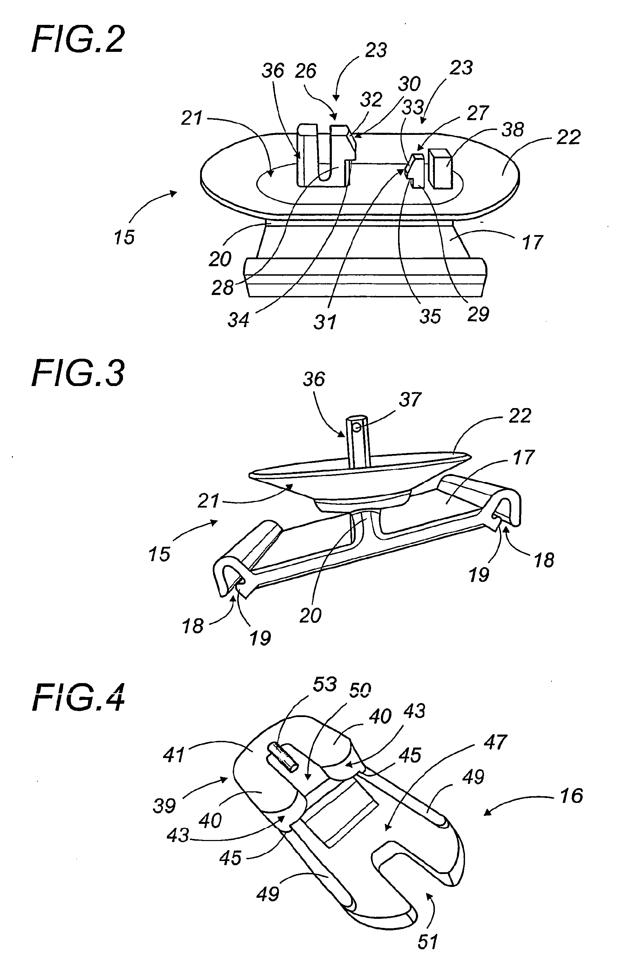

Un mode de réalisation préférentiel de cet élément d'accrochage a été représenté seul sur les figures 4 à 7 et va maintenant être décrit de façon détaillée en référence à ces figures.

L'élément d'accrochage 16 comporte en partie supérieure une structure saillante d'accrochage appelée tête de clip 39, conçue pour s'engager dans l'ouverture 13 correspondante du support 5 et assurer ainsi le maintien de la baguette 2 sur la carrosserie.

Selon une variante préférentielle de l'invention, la tête de clip 39 présente un corps de forme générale dite en « U couché » comprenant deux branches latérales 40 réunies à l'avant par une portion centrale incurvée 41. Cette conformation garantit un effet avantageux de centrage lors de l'introduction des différentes têtes de clip 39 de la baguette dans la zone large des ouvertures 13 correspondantes de la carrosserie.

Pour faciliter l'insertion de la tête de clip 39 dans la zone large des ouvertures 13, on peut prévoir d'arrondir les arrêtes du chant périphérique 42 de la tête de clip 39, ainsi que l'extrémité arrière 43 de ses branches latérales 40.

De la même façon, la portion centrale incurvée 41 présente de préférence en sous-face un chanfrein d'entrée 44, facilitant le passage de la tête de clip 39 vers la zone étroite de l'ouverture 13 en assurant un guidage progressif de celle-ci.

En outre, les branches latérales 40 de la tête de clip 39 peuvent avantageusement être prolongées vers le bas chacune par une nervure d'appui 45, préférentiellement de forme arrondie et s'étendant dans le prolongement du chant périphérique 42.

Bien évidemment, l'invention n'est pas limitée à la tête de clip 39 telle que représentée et précédemment décrite. L'élément d'accrochage 16 du clip de fixation 12 selon l'invention peut comporter toute autre tête de clip appropriée susceptible de coopérer avec l'ouverture 13 en trou de serrure de la carrosserie et d'assurer ainsi le maintien de la baguette 2.

La tête de clip 39 est prolongée vers le bas par une âme centrale 46 plus étroite, susceptible de passer dans la zone étroite de l'ouverture 13 de carrosserie.

Cette âme centrale 46 prend naissance à partir d'une embase 47 prévue pour être rapportée sur la face supérieure de la pièce de base 15, et qui est de préférence sensiblement plane et par exemple de forme ovale. L'âme centrale 46 est disposée préférentiellement dans la partie avant de l'embase 47 et dans la zone médiane de celle-ci.

L'extrémité avant de l'embase 47 présente de préférence un chanfrein 48 disposé sous le chanfrein d'entrée 44 de la tête de clip 39 et de pente inversée par rapport à celui-ci. Ces deux chanfreins constituent une zone d'entrée progressive pour la tôle de carrosserie et coopèrent pour guider la tête de clip 39 jusqu'à son positionnement de blocage dans l'ouverture 13.

Deux nervures 49 peuvent également être prévues sur la face supérieure de l'embase 47, préférentiellement en bordure latérale de celle-ci. Ces deux nervures 49 participent au guidage lors de la mise en position de la tête de clip 39 et coopèrent avec les nervures d'appui 45 de la tête de clip pour réaliser le coincement de la tôle de carrosserie 6.

Lorsque la tête de clip 39 est engagée dans la zone étroite de l'ouverture 13, la tôle de carrosserie 6 se retrouve coincée entre les nervures d'appui 45 de la tête de clip 39 et celles 49 de l'embase 47. Ces nervures, de surface d'appui réduite, constituent la seule zone de contact entre le clip de fixation 12 en position écartée de prémontage et la carrosserie 6. La surface de contact est minimale, ce qui permet une application optimale des produits de traitement, notamment de cataphorèse, et de peinture sur la quasi-totalité de la surface de la carrosserie.

Comme déjà indiqué précédemment, l'élément d'accrochage 16 comporte un moyen de retenue 24 complémentaire de celui 23 porté par la pièce de base 15.

Pour cela, l'élément d'accrochage 16 comporte de préférence au moins un évidement 50 traversant prévu pour le passage du moyen de retenue 23 de la pièce de base 15.

Dans le mode de réalisation représenté, l'élément d'accrochage 16 présente deux évidements traversants 50 et 51, prévus pour le passage des éléments d'encliquetage 26 et 27 de la pièce de base 15, ainsi que de préférence de l'élément de guidage 36 et du plot anti-recul 38.

Le premier évidement 50, préférentiellement situé dans la partie centrale de l'élément d'accrochage 16, présente de préférence une forme elliptique et se prolonge à l'intérieur de l'âme centrale 46 et de la tête de clip 39.

L'évidement 51 est ménagé dans la partie arrière de l'embase 47. Il est de préférence ouvert à l'arrière à la manière d'une encoche dans la partie arrière de l'élément d'accrochage 16.

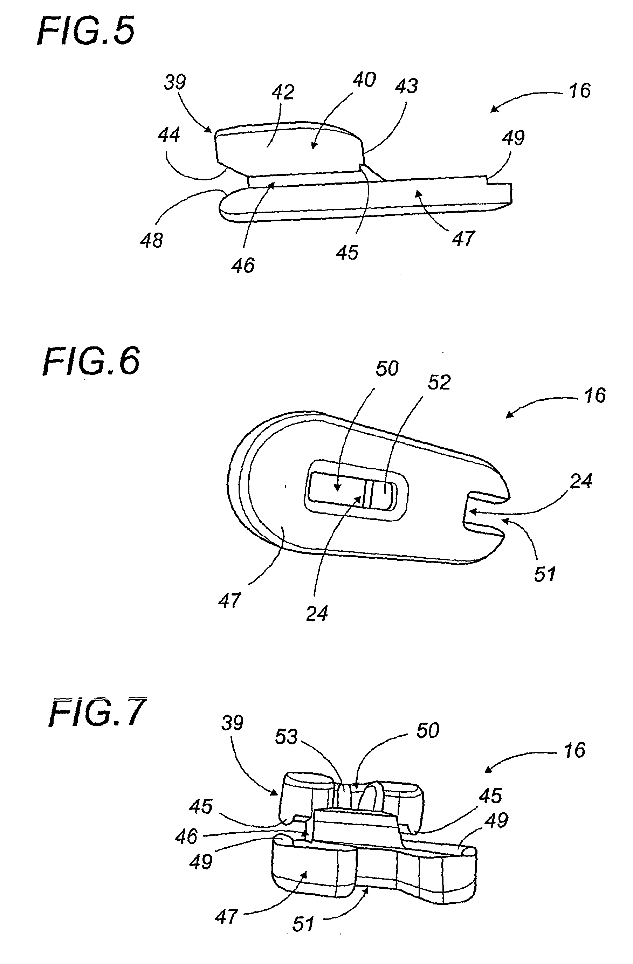

Sur la figure 6, on peut remarquer un rebord incliné 52 se trouvant à l'intérieur de cet évidement 50 et destiné à coopérer avec la saillie triangulaire 30 de l'élément d'encliquetage 26 de la pièce de base 15.

Une rainure 53 peut en outre être ménagée dans la paroi avant de l'évidement 50. Cette rainure 53 est destinée à recevoir et à coopérer avec l'ergot 37 de l'élément de guidage 36 de la pièce de base 15.

Grâce au clip de fixation 12 à deux positions selon l'invention, la baguette 2 peut être prémontée sur la carrosserie 6 d'un véhicule préalablement aux opérations de traitement, notamment par cataphorèse, et de mise en peinture. Lors de ces opérations, la baguette 2 avec ses clips de fixation 12 doit subir plusieurs montées en température de séchage et un passage au four à une température d'environ 200°C après le bain de cataphorèse.

La baguette 2 ainsi que les deux parties 15 et 16 de ses clips de fixation 12 doivent donc être réalisées dans une matière plastique résistant à de telles températures. Elles sont par exemple réalisées dans une matière plastique à base de polyamide.

L'élément d'accrochage 16 et la pièce de base 15 du clip de fixation 12 sont des pièces moulées par injection, indépendamment de la baguette 2, qui, une fois la baguette 2 montée sur la carrosserie 6, ne sont pas visibles par l'utilisateur car situées à l'arrière de la baguette 2. Elles peuvent donc en outre être renforcées par des fibres de verre, par exemple jusqu'à environ 30%.

La matière plastique utilisée pour la réalisation de la baguette 2 et de ses clips de fixation 12 doit également contenir un additif, du noir de carbone par exemple, lui conférant la conductivité suffisante et nécessaire à la réalisation des étapes de peinture électrostatique.

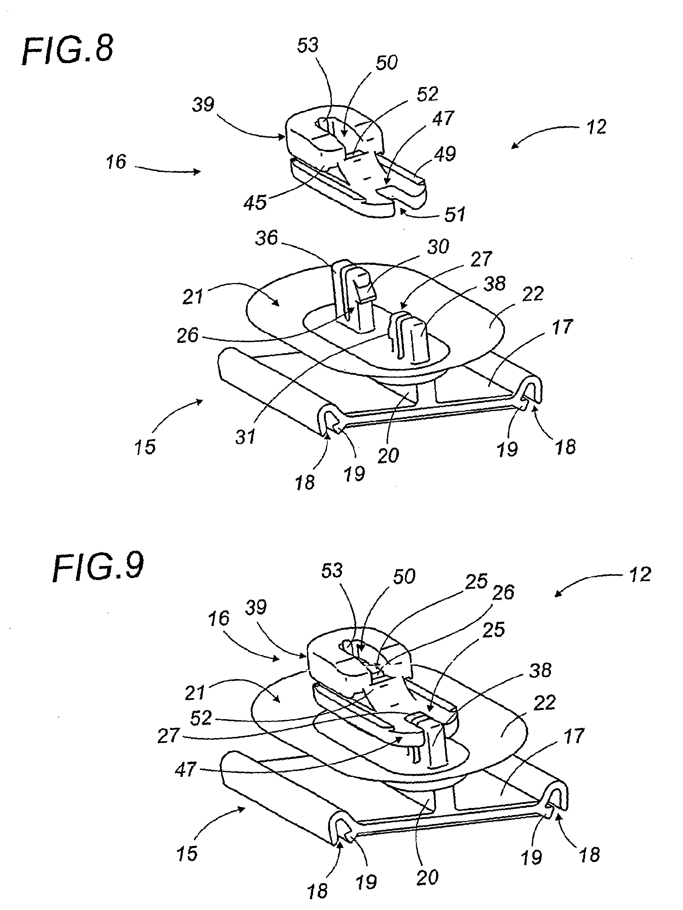

Le fonctionnement du clip de fixation à deux positions de maintien représenté va maintenant être décrit en référence aux figures 8 à 12.

Les pièces de base 15 doivent d'abord être fixées à la face intérieure 4 de la baguette 2. Pour cela, ces pièces de base 15 sont assemblées par clipsage sur les nervures longitudinales 14 de la baguette 2, au moyen des rainures d'extrémité 18 de leur plan de base 17 et de leurs conformations d'accrochage 19.

Les éléments d'accrochage 16 sont ensuite positionnés au-dessus de chacune des pièces de base 15, comme représenté sur la figure 8, puis mis en place sur celles-ci par engagement des éléments d'encliquetage 26 et 27 des pièces de base 15 dans les évidements correspondant des éléments d'accrochage 16.

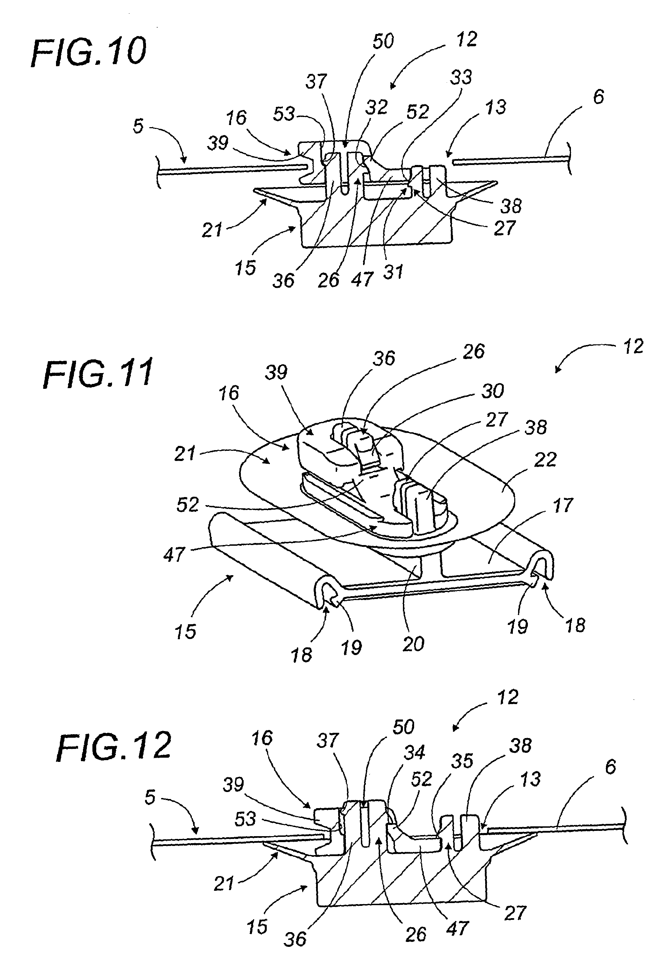

Les éléments d'accrochage 16 sont, à ce stade et comme représenté sur les figures 9 et 10, placés en position haute sur les pièces de base 15, ce qui correspond au premier cran ou à la première position de la structure de fixation 25.

La partie supérieure de l'élément de guidage 36 et celle de l'élément d'encliquetage avant 26 sont positionnées à l'intérieur de l'évidement 50 de l'élément d'accrochage 16. L'ergot 37 de l'élément de guidage est engagé dans la rainure 53 de la paroi avant de l'évidement 50 et la rampe progressive 32 de la saillie triangulaire 30 de l'élément d'encliquetage 26 se trouve en appui contre le rebord incliné 52.

De la même façon, la partie supérieure de l'élément d'encliquetage arrière 27 et celle du plot anti-recul 38 sont positionnées à l'intérieur de l'évidement 51 de l'élément d'accrochage 16, la saillie triangulaire 31 de l'élément d'encliquetage 27 se trouvant sous l'embase 47 en appui contre le bord avant de l'évidement 51.

Cette première étape d'assemblage peut être réalisée de manière automatisée par une machine-outil. Elle peut avantageusement avoir lieu chez le fabricant de baguettes, la baguette étant ensuite livrée sur le lieu de son montage final, avec les deux parties de ses clips de fixation 12 déjà assemblées en position haute. Cependant, cet assemblage peut évidemment être manuel et/ou être réalisé juste avant le montage de la baguette 2 sur son support 5.

La baguette 2 est ensuite montée sur son support 5. Grâce aux clips selon l'invention, elle peut être prémontée en position écartée et à distance de son support 5. Pour cela, les têtes de clip 39 des différents clips de fixation 12 sont insérées à travers la zone large des ouvertures 13 en forme de trou de serrure correspondantes du support 5.

Le monteur déplace ensuite la baguette 2 par un mouvement de translation longitudinale vers l'avant. Les clips de fixation 12 sont ainsi translatés vers la zone étroite des ouvertures 13 jusqu'à une position de blocage.

Lors de ce mouvement de translation, l'âme centrale 46 de chaque clip de fixation 12 traversant l'une des ouvertures 13, passe de la zone large vers la zone étroite de cette ouverture. Ce mouvement est guidé grâce aux chanfreins d'entrée 44 de la tête de clip 39 et 48 de l'embase 47.

Simultanément, les nervures d'appui 45 de la tête de clip 39 et celles 49 de l'embase 47 viennent en prise avec les bords de carrosserie 6 entourant la zone étroite de l'ouverture, loin des éventuelles bavures liées au poinçonnage des ouvertures 13.

Grâce à la conception particulièrement avantageuse du clip selon l'invention, le support 5 n'est en contact avec le clip de fixation 12 qu'au niveau de la surface d'appui extrêmement limitée de ces nervures 45 et 49.

La baguette 2 est en position fixe sur son support 5 mais écartée par rapport à celui-ci, les rebords longitudinaux 8 de la baguette se trouvant à distance de la carrosserie 6. De même, la platine d'étanchéité 21 qui appartient à la pièce de base 15 se trouve à l'écart du support 5. Son bord périphérique remontant 22 est ainsi de préférence décalé d'environ 3 mm par rapport à la tôle de carrosserie 6.

Les opérations de traitement et de mise en peinture de la baguette et de son support peuvent ainsi être réalisées de manière tout à fait satisfaisante sur sensiblement toute la surface à traiter.

Une fois les opérations de traitement et/ou de peinture terminées, le monteur n'a qu'à exercer sur la baguette 2, un effort de poussée transversal à celle-ci, pour que les clips de fixation 12 selon l'invention passent dans leur deuxième position correspondant au deuxième cran de la structure de fixation 25.

Lors de ce mouvement transversal, les saillies triangulaires, respectivement 30 et 31, des éléments d'encliquetage 26 et 27 portés par les pièces de base 15 glissent par leur rampe supérieure progressive 32 et 33 contre, respectivement, le rebord incliné 52 et le bord avant de l'évidement 51, jusqu'à se retrouver en appui de blocage de leur sous-face plane d'appui 34 et 35 contre, respectivement, la face supérieure du rebord 52 et celle de l'embase 47.

Les éléments d'accrochage 16 se retrouvent alors en position basse sur les pièces de base 15 et la baguette 2 en position finale plaquée de verrouillage contre son support 5, comme illustré sur les figures 11 et 12.

L'homme du métier pourra sans difficulté imaginer de nombreuses autres variantes ou adaptations du clip de fixation 12 à deux positions de maintien selon l'invention, en fonction de l'application souhaitée et des contraintes techniques auxquelles le clip et la baguette porteuse doivent répondre.

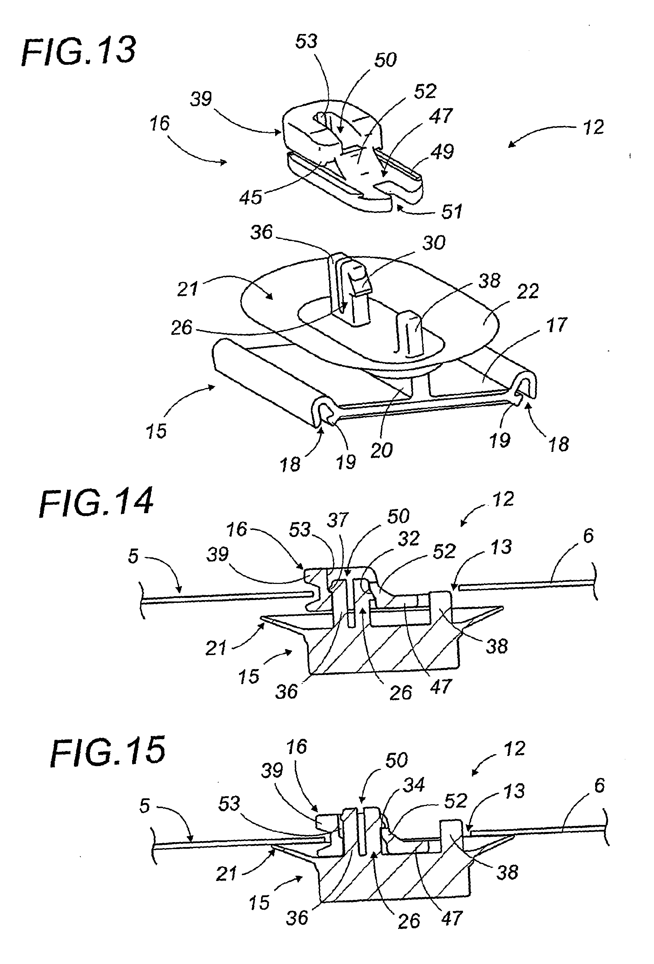

Ainsi par exemple, on peut imaginer un deuxième mode de réalisation du clip de fixation 12, représenté sur les figures 13 à 15, dans lequel la pièce de base 15 ne comporte qu'un seul élément d'encliquetage 26 à l'avant. A l'arrière, l'élément d'encliquetage arrière 27 de la variante de base a été supprimé et seul le plot anti-recul 38 est conservé.

L'accrochage de l'élément d'accrochage 16 sur la pièce de base 15, possible selon deux positions, est réalisé comme précédemment par coopération de la saillie triangulaire 30 de l'élément d'encliquetage 26 avec le rebord incliné 52 et de l'ergot 37 de l'élément de guidage avec la rainure 53 de la paroi avant de l'évidement 50.

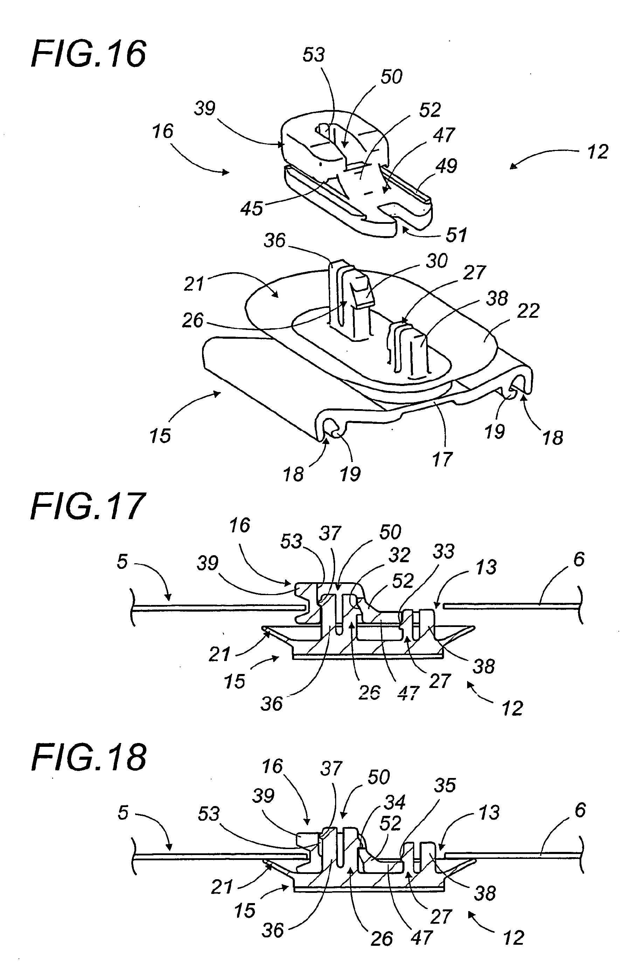

Un troisième mode de réalisation du clip de fixation 12 selon l'invention a été représenté à titre d'exemple sur les figures 16 à 18.

Ce mode de réalisation est destiné à équiper des baguettes fines dont l'espace intérieur 7 disponible pour les clips de fixation 12 est de faible hauteur. La hauteur des clips de fixation 12 selon l'invention doit donc également être réduite. Pour cela, la pièce de base 15 ne comporte pas de paroi 20 intermédiaire entre son plan de base 17 et la platine d'étanchéité 21, cette dernière s'élevant directement du plan de base 17.

Dans la variante représentée, on peut également remarquer que le plan de base 17 n'est pas incliné comme dans les modes de réalisation précédents, mais sensiblement horizontal et à bords légèrement remontants.

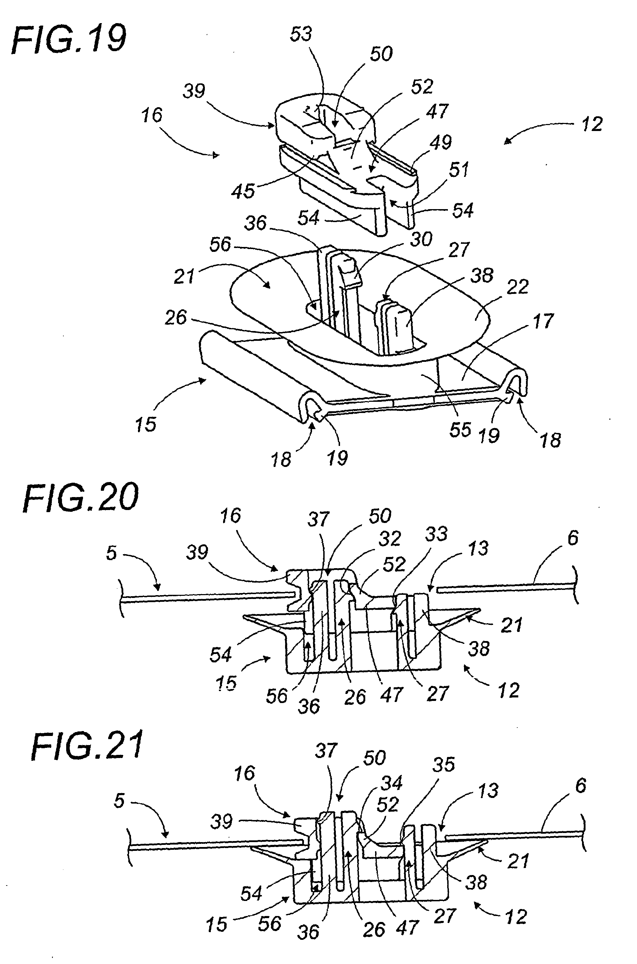

Sur les figures 19 à 21, on a représenté encore un quatrième exemple de réalisation du clip de fixation 12 à deux positions selon l'invention.

Dans cette variante, la face inférieure de l'élément d'accrochage 16 est prolongée vers le bas par deux parois 54 sensiblement parallèles, bordant une de chaque côté au moins un évidement traversant et de préférence comme représenté les deux évidements traversants 50 et 51.

Sur la pièce de base 15, un socle 55 plus large remplace la paroi 20 pour supporter la platine d'étanchéité 21. Une cavité de réception 56 est ménagée à travers la platine d'étanchéité 21, dans le socle 55, de part et d'autre du moyen de retenue 23, à savoir ici les éléments d'encliquetage 26 et 27, de manière à recevoir les parois 54 lorsque l'élément d'accrochage 16 est monté sur la pièce de base 15.

Pour garantir une sécurité absolue du verrouillage de la baguette, il est possible de prévoir encore sur la face arrière de la baguette un dispositif de fixation longitudinale de sécurité (non représenté), également appelé dispositif de fixation positive. On peut imaginer pour cela tout type de dispositif connu, par exemple vissage, marteau, fût, croix ou tout autre moyen approprié.

De façon optionnelle, ce dispositif de fixation positive peut être suffisamment long pour également verrouiller longitudinalement la baguette lorsqu'elle se trouve en position écartée. Il participe ainsi à la fixation de la baguette sur la carrosserie durant les opérations de mise en peinture.

De manière évidente, l'invention ne se limite pas aux modes de réalisation préférentiels décrits et représentés sur les différentes figures, l'homme du métier pouvant y apporter de nombreuses modifications et imaginer d'autres variantes sans sortir ni de la portée, ni du cadre de l'invention.

## Revendications

1. Clip de fixation destiné à assurer la fixation sur un support (5) et plus particulièrement sur la carrosserie (6) d'un véhicule routier notamment du type automobile, d'un élément linéaire (2) décoratif et/ou fonctionnel, par exemple du type baguette, bande, moulure, enjoliveur de ceinture de caisse ou de bas de caisse, clip de fixation (12) comprenant une pièce de base (15) rapportée sur ou moulée d'une pièce avec la face intérieure (4) de l'élément linéaire (2) et un élément d'accrochage (16) indépendant et destiné à être rapporté sur la pièce de base (15), l'élément d'accrochage (16) comportant une structure saillante d'accrochage appelée tête de clip (39) conçue pour coopérer avec une ouverture de montage (13) du type en « trou de serrure », ménagée en regard dans le support (5), clip de fixation (12) comportant en outre une platine d'étanchéité (21) destinée à obturer l'ouverture de montage lorsque l'élément linéaire est en position finale d'utilisation, clip de fixation **caractérisé en ce que** la pièce de base (15) comporte un moyen de retenue (23) destiné à coopérer avec un moyen de retenue (24) complémentaire porté par l'élément d'accrochage (16), ces deux moyens de retenue (23, 24) constituant ensemble une structure de fixation à deux positions de maintien (25) permettant de solidariser l'élément d'accrochage (16) sur la pièce de base (15) à deux hauteurs différentes, se traduisant par deux positions de montage de l'élément linéaire (2) sur son support (5) obtenues par deux mouvements de nature différente de l'élément linéaire (2) par rapport au support (5) : une position écartée de prémontage à distance du support (5), obtenue par un mouvement de coulissement longitudinal et une position de verrouillage plaquée contre le support (5) correspondant à sa position finale d'utilisation et obtenue au moyen d'une poussée transversale sensiblement perpendiculaire au support (5), et **en ce que** la platine d'étanchéité (21) est portée par la pièce de base (15) et se trouve à distance du support (5) dans la position écartée de prémontage et en contact avec celui-ci dans la position de verrouillage.

2. Clip de fixation selon la revendication précédente **caractérisé en ce que** la structure de fixation à deux positions de maintien (25) est une structure d'encliquetage à deux crans successifs.

3. Clip de fixation selon l'une quelconque des revendications précédentes **caractérisé en ce que** la pièce de base (15) comporte un plan de base (17), une platine d'étanchéité (21) s'élevant du plan de base (17) ou supporté par une paroi longitudinale (20) s'élevant du plan de base (17), et un moyen de retenue (23) s'élevant au-dessus de la platine d'étanchéité (21) et destiné à coopérer avec le moyen de retenue (24) complémentaire porté par l'élément d'accrochage (16).

4. Clip de fixation selon la revendication 1 ou 2 **caractérisé en ce que** la pièce de base (15) comporte un plan de base (17), un socle (55) s'élevant du plan de base (17), une platine d'étanchéité (21) supportée par le socle (55) et un moyen de retenue (23) s'élevant au-dessus de la platine d'étanchéité (21) et destiné à coopérer avec le moyen de retenue (24) complémentaire porté par l'élément d'accrochage (16) et **en ce qu'**une cavité de réception (56) est ménagée à travers la platine d'étanchéité (21), dans le socle (55), de part et d'autre du moyen de retenue (23).

5. Clip de fixation selon la revendication 3 ou 4 **caractérisé en ce que** la pièce de base (15) est rapportée sur la face intérieure (4) de l'élément linéaire (2) ; et **en ce que** le plan de base (17) est terminé de chaque côté par une rainure (18) ouverte vers le bas, présentant une conformation d'accrochage (19) et destinée à coopérer avec une nervure (14) s'étendant sur la face intérieure (4) de l'élément linéaire (2) pour assurer la fixation de la pièce de base (15) sur l'élément linéaire (2).

6. Clip de fixation selon l'une quelconque des revendications précédentes **caractérisé en ce que** la pièce de base (15) comporte en outre un plot anti-recul (38) servant de butée arrière pour le clip (12) une fois celui-ci mis en place dans l'ouverture (13).

7. Clip de fixation selon l'une quelconque des revendications précédentes **caractérisé en ce que** le moyen de retenue (23) de la pièce de base (15) comprend au moins un élément d'encliquetage (26) de type sapin, c'est-à-dire comportant un plot (28) de la partie supérieure duquel s'étend une saillie (30) de forme sensiblement triangulaire à rampe supérieure progressive (32) et à sous-face plane d'appui (34).

8. Clip de fixation selon l'une quelconque des revendications précédentes **caractérisé en ce que** la pièce de base (15) comprend un élément de guidage (36) présentant un ergot (37) saillant destiné à coopérer avec une rainure (53) de l'élément d'accrochage (16).

9. Clip de fixation selon l'une quelconque des revendications précédentes **caractérisé en ce que** l'élément d'accrochage (16) comporte une embase (47) destinée à être rapportée sur la face supérieure de la pièce de base (15), une âme centrale (46) s'élevant de la face supérieure de l'embase (47) et une tête de clip (39) prolongeant l'âme centrale (46).

10. Clip de fixation selon l'une quelconque des revendications précédentes **caractérisé en ce que** l'élément d'accrochage (16) comporte au moins un évidement (50) traversant prévu pour le passage du moyen de retenue (23) de la pièce de base (15).

11. Clip de fixation selon la revendication précédente **caractérisé en ce que** l'élément d'accrochage (16) comporte un rebord incliné (52) se trouvant à l'intérieur de cet évidement (50).

12. Clip de fixation selon la revendication 9 et la revendication 10 ou 11 **caractérisé en ce que** l'élément d'accrochage (16) comporte deux évidements traversants (50, 51), le premier (50) présentant une forme elliptique et se prolongeant à l'intérieur de l'âme centrale (46) et de la tête de clip (39) et le second (51) étant ménagé dans la partie arrière de l'embase (47) et étant ouvert à l'arrière à la manière d'une encoche.

13. Clip de fixation selon l'une quelconque des revendications 10 à 12 **caractérisé en ce que** l'élément d'accrochage (16) est prolongé vers le bas par deux parois (54) sensiblement parallèles, bordant une de chaque côté au moins un évidement traversant (50, 51).

14. Clip de fixation selon la revendication 9 **caractérisé en ce que** la tête de clip (39) et l'extrémité avant de l'embase (47) présentent chacune un chanfrein (44, 48) disposé l'un en dessous de l'autre et de pente inversée ; et **en ce que** la tête de clip (39) est prolongée vers le bas par deux nervures latérales d'appui (45) qui coopèrent, pour réaliser le coincement du support (5), avec deux nervures latérales (49) s'élevant de la face supérieure de l'embase (47).

15. Clip de fixation selon l'une quelconque des revendications précédentes **caractérisé en ce qu'**il est réalisé avec une matière plastique à base de polyamide ou renforcée par des fibres de verre ou contenant un additif lui conférant une conductivité suffisante pour la réalisation des étapes de peinture électrostatique.

16. Elément linéaire (2) décoratif ou fonctionnel, par exemple du type baguette, bande, moulure, enjoliveur de ceinture de caisse ou de bas de caisse, destiné à être rapporté contre et monté sur un support (5) et plus particulièrement la carrosserie (6) d'un véhicule routier notamment du type automobile, **caractérisé en ce qu'**il comporte sur sa face intérieure (4) au moins un clip de fixation à deux positions de maintien (12) selon l'une quelconque des revendications précédentes.

17. Elément linéaire (2) selon la revendication précédente **caractérisé en ce qu'**il comporte en outre au moins un dispositif de fixation longitudinale de sécurité et **en ce que** ce dispositif de fixation longitudinale de sécurité est suffisamment long pour également verrouiller longitudinalement l'élément linéaire (2) en position écartée de prémontage à distance du support (5).

## Claims

1. Fastening clip for ensuring the fastening on a support (5) and more particularly on the bodywork (6) of a road vehicle, in particular of an automobile type, of a decorative and/or functional linear element (2), for example of the kind of rod, band, moulding, belt line or rocker panel hubcap, fastening clip (12) comprising a base piece (15) arranged on or moulded in one piece with the inner face (4) of the linear element (2) and an independent hooking element (16) intended to be arranged on the base piece (15), hooking element (16) comprising a so-called clip head protruding structure of hooking (39) created to cooperate with a «keyhole» type assembly opening (13), arranged opposite in the support (5), fastening clip (12) comprising in addition a sealing plate (21) intended to plug up the assembly opening when the linear element is in a final use position, fastening clip **characterized in that** the base piece (15) comprises a retaining element (23) intended to cooperate with a complementary retaining element (24) carried by the hooking element (16), both retaining means (23, 24) representing together a fastening structure with two retaining positions (25) allowing to join the hooking element (16) on the base piece (15) in two different heights, defining two assembly positions of the linear element (2) on its support (5) obtained by two different movements of the linear element (2) compared to the support (5): a pre-assembly outlying position at a distance from the support (5), obtained by a longitudinal sliding movement and a locking position flattened against the support (5) corresponding to its final use position and obtained through a sensibly perpendicular transverse thrust on the support (5), and **in that** the sealing plate (21) is carried by the base piece (15) and is placed at a distance of the support (5) in the pre-assembly separated position and in contact with the latter in the locking position.

2. Fastening clip according to the previous claim **characterized in that** the fastening structure with two holding positions (25) is a ratchet structure with two successive notches.

3. Fastening clip according to any of the preceding claims **characterized in that** the base piece (15) comprises a base plane (17), a sealing plate (21) rising up from the base plane (17) or supported by a longitudinal wall (20) rising up from the base plane (17), and a retaining element (23) rising up over the sealing plate (21) and intended to cooperate with the complementary retaining element (24) carried by the hooking element (16).

4. Fastening clip according to claim 1 or 2 **characterized in that** the base piece (15) comprises a base plane (17), a base (55) rising up from the base plane (17), a sealing plate (21) supported by the base (55) and a retaining element (23) rising up over the sealing plate (21) and intended to cooperate with the complementary retaining element (24) carried by the hooking element (16) and **in that** a reception cavity (56) is arranged across the sealing plate (21), in the base (55), on both sides of the retaining element (23).

5. Fastening clip according to claim 3 or 4 **characterized in that** the base piece (15) is placed on the inner face (4) of the linear element (2); and **in that** the base plane (17) is finished on each side by a groove (18) opened downwards, having a hooking conformation (19) and intended to cooperate with a rib (14) being extended on the inner face (4) of the linear element (2) in order to ensure the fastening of the base piece (15) on the linear element (2).

6. Fastening clip according to any of the preceding claims **characterized in that** the base piece (15) also includes an anti-recoil pin (38) serving as a rear stop for the clip (12) when said clip is placed in the opening (13).

7. Fastening clip according to any of the preceding claims **characterized in that** the retaining element (23) of the base piece (15) includes at least one fir tree type racket element (26), namely comprising a pin (28) of the upper part from which a protrusion (30) is extended having a roughly triangular form with a progressive upper ramp (32) and a holding flat underside (34).

8. Fastening clip according to any of the preceding claims **characterized in that** the base piece (15) includes a guidance element (36) presenting a protruding bolt (37) intended to cooperate with a groove (53) of the hooking element (16).

9. Fastening clip according to any of the preceding claims **characterized in that** the hooking element (16) includes a sub-plate (47) intended to be arranged on the top side of the base piece (15), a central core (46) rising up from the top side of the sub-plate (47) and a clip head.

10. Fastening clip according to any of the preceding claims **characterized in that** the hooking element (16) includes at least a crossing recess (50) for the passage of the retaining means (23) from the base piece (15).

11. Fastening clip according to the previous claim **characterized in that** the hooking element (16) comprises an inclined flange (52) located in said recess (50).

12. Fastening clip according to claim 9 and claims 10 or 11 **characterized in that** the hooking element (16) comprises two crossing recesses (50, 51), the first one (50) having an elliptic form and being extended in the central core (46) and the clip head (39) and the second one (51) being arranged in the rear part of the collar (47) and being opened in the backside in the form of a notch.

13. Fastening clip according to any of the claims 10 to 12 **characterized in that** the hooking element (16) is extended downwards by two roughly parallel walls (54), each one bordering on each side at least one crossing recess (50, 51).

14. Fastening clip according to claim 9 **characterized in that** the clip head (39) and the front end of the sub-plate (47) have a bevel (44, 48) placed one under the other and having an inverted slope; and **in that** the clip head (39) is extended downwards by two support lateral ribs (45), which cooperate, in order to perform the support (5) jamming, with two lateral ribs (49) rising up from the top side of the sub-plate (47).

15. Fastening clip according to any of the preceding claims **characterized in that** it is made of a plastic based on polyamide or reinforced by glass fibers or comprising an additive that confers to the latter an adequate conductivity in order to perform the electrostatic painting steps.

16. Functional or decorative linear element (2), for instance of the kind of rod, band, moulding, belt line or rocker panel hubcap, intended to be arranged against and mounted on a support (5) and more particularly on the bodywork (6) of a road vehicle, in particular of the automobile type, **characterized in that** it comprises on its inner face (4) at least one fastening clip with two retaining positions (12) according to any of the preceding claims.

17. Linear Element (2) according to the previous claim **characterized in that** it further includes at least one longitudinal security fastening device and **in that** this longitudinal security fastening device is sufficiently long to further lock longitudinally the linear element (2) in a pre-assembly separated position at a distance of the support (5).

## Patentansprüche

1. Befestigungsklammer, die dazu bestimmt ist, die Befestigung auf einem Träger (5), speziell auf der Karosserie (6) eines Straßenfahrzeugs, insbesondere eines Personenkraftwagens, eines linearen, dekorativen und/oder funktionellen Elements (2), zum Beispiel in der Art eines Stabes, eines Bandes, einer Leiste, einer Blende für die Karosserie-Gürtellinie oder -Schwellenbereich abzusichern, wobei die Befestigungsklammer (12) ein Basisteil (15) umfasst, das auf die Innenseite (4) des linearen Elements (2) aufgesetzt ist oder einteilig mit dieser und einem unabhängigen Ankopplungselement (16) ausgebildet ist und dazu bestimmt ist, auf das Basisteil (15) aufgesetzt zu werden, wobei das Ankopplungselement (16) mit einer überstehenden Ankopplungsstruktur, den sogenannten Klammerkopf (39), ausgestattet ist, der so ausgestaltet ist, um mit einer Montageöffnung (13) in der Art eines «Schlüssellochs» zusammenzuwirken, die in dem Träger (5) gegenüberliegend platziert ist, wobei die Befestigungsklammer (12) außerdem mit einer Dichtungsplatine (21) ausgestattet ist, die dazu bestimmt ist, die Montageöffnung abzudichten, wenn sich das lineare Element in der Benutzungsendposition befindet, wobei die Befestigungsklammer **dadurch gekennzeichnet ist, dass** das Basisteil (15) ein Rückhaltemittel (23) umfasst, das dazu bestimmt ist, mit einem zusätzlichen Rückhaltemittel (24) zusammenzuwirken, das von dem Ankupplungselement (16) getragen wird, wobei diese beiden Halteelemente (23, 24) zusammen eine Befestigungsstruktur mit zwei Haltepositionen (25) ausbilden, wodurch es ermöglicht ist, das Ankopplungselement (16) auf das Basisteil (15) auf zwei verschiedenen Höhen kraftschlüssig zu befestigen, wobei dieses durch zwei Montagepositionen des linearen Elements (2) auf dessen Träger (5) zum Ausdruck kommt, die durch zwei Bewegungen verschiedener Art des linearen Elements (2) zum Träger (5) hin erreicht wird: eine entfernte Vormontage-Position auf Abstand des Trägers (5), die durch eine Längsgleitbewegung und eine gegen den Träger (5) gedrückte Verriegelungsposition erreicht wird, die dessen Benutzungsendposition entspricht und die mittels einer Querverschiebung im wesentlichen senkrecht zum Träger (5) ereicht wird, sowie **dadurch**, dass die Dichtungsplatine (21) von dem Basisteil (15) getragen wird und sich auf einem gewissen Abstand des Trägers (5) in der abgewandten Vormontage-Position befindet und mit diesen in der Verriegelungsposition in Kontakt steht.

2. Befestigungsklammer nach dem vorangehenden Anspruch, **gekennzeichnet dadurch, dass** die Befestigungsstruktur mit zwei Haltepositionen (25) eine Raststruktur mit zwei aufeinander folgenden Rastkerben ist.

3. Befestigungsklammer nach einem der vorangehenden Ansprüche, **gekennzeichnet dadurch, dass** das Basisteil (15) eine Basisebene (17) umfasst, und eine Dichtungsplatine (21), die sich von der Basisebene (17) erhebt oder von einer Längswand (20) abgestützt ist, die sich von der Basisebene (17) erhebt, und ein Rückhaltemittel (23) umfasst, das sich über der Dichtungsplatine (21) erhebt, und das dafür bestimmt ist, mit dem zusätzlichen Rückhaltemittel (24), das von dem Ankupplungselement (16) getragen wird, zusammenzuwirken.

4. Befestigungsklammer nach dem Anspruch 1 oder 2, **gekennzeichnet dadurch, dass** das Basisteil (15) eine Grundebene (17) umfasst, und einen Sockel (55), der sich von der Basisebene (17) erhebt, eine Dichtungsplatine (21), die von dem Sockel (55) getragen wird und ein Rückhaltemittel (23), das sich über der Dichtungsplatine (21) erhebt und dazu bestimmt ist, mit dem zusätzlichen Rückhaltemittel (24), das von dem Ankopplungselement (16) getragen wird, zusammenzuwirken, und **dadurch**, dass ein Aufnahmehohlraum (56) durch die Dichtungsplatine (21) hindurch gebracht wird, in dem Sockel (55), auf beiden Seiten des Rückhaltemittels (23).

5. Befestigungsklammer nach Anspruch 3 oder 4 **gekennzeichnet dadurch, dass** das Basisteil (15) auf die Innenseite (4) des linearen Elements (2) aufgebracht ist, sowie **dadurch**, dass die Basisebene (17) an jeder Seite durch eine nach unten geöffnete Nute (18) abgeschlossen ist, und die eine Ankopplungsausbildung (19) aufweist und dazu bestimmt ist, mit einer Rippe (14), die sich auf der Innenseite (4) des linearen Elements (2) erstreckt, zusammenzuwirken, um die Befestigung des Basisteils (15) auf dem linearen Element (2) abzusichern.

6. Befestigungsklammer nach einem der vorangehenden Ansprüche, **gekennzeichnet dadurch, dass** das Basisteil (15) außerdem eine Rückschiebesperre (38) umfasst, der als hinterer Anschlag für die Klammer (12) dient, wenn diese in der Öffnung (13) positioniert ist.

7. Befestigungsklammer nach einem der vorangehenden Ansprüche, **gekennzeichnet dadurch, dass** das Rückhaltemittel (23) des Basisteils (15) mindestens ein Rastelement (26) der Art einer Tanne umfasst, das heißt, das einen Kontakt (28) des Oberteils enthält, von welchem sich ein Vorsprung (30) einer im wesentlichen dreieckigen Form mit einer progressiven oberen Rampe (32) und an der flachen unteren Auflageseite (34) erstreckt.

8. Befestigungsklammer nach einem der vorangehenden Ansprüche, **gekennzeichnet dadurch, dass** das Basisteil (15) ein Führungselement (36) umfasst, das einen vorstehenden Nocken (37) aufweist, der dazu bestimmt ist, mit der Nute (53) des Ankopplungselements (16) zusammenzuwirken.

9. Befestigungsklammer nach einem der vorangehenden Ansprüche, **gekennzeichnet dadurch, dass** das Ankopplungselement (16) eine Halterung (47) umfasst, die dazu bestimmt ist, auf die Oberseite des Basisteils (15) aufgesetzt zu werden, sowie einen zentralen Steg (46), der sich von der Oberseite der Halterung (47) erhebt, und einen Klammerkopf umfasst.

10. Befestigungsklammer nach einem der vorangehenden Ansprüche, **gekennzeichnet dadurch, dass** das Ankopplungselement (16) mindestens eine durchgehende Ausnehmung (50) umfasst, die für die Durchführung des Rückhaltemittels (23) des Basisteils (15) vorgesehen ist.

11. Befestigungsklammer nach dem vorangehenden Anspruch, **gekennzeichnet dadurch, dass** das Ankopplungselement (16) einen geneigten Rand (52) umfasst, der sich in dieser Ausnehmung (50) befindet.

12. Befestigungsklammer nach dem Anspruch 9 und dem Anspruch 10 oder 11, **gekennzeichnet dadurch, dass** das Ankopplungselement (16) zwei durchgehende Ausnehmungen (50, 51) umfasst, wobei die erste (50) eine elliptische Form aufweist und sich innerhalb des zentralen Stegs (46) und des Klammerkopfes (39) verlängert und die zweite (51) in dem hinteren Teil der Halterung (47) untergebracht und hinten nach Art eines Einschnitts geöffnet ist.

13. Befestigungsklammer nach einem der Ansprüche 10 bis 12, **gekennzeichnet dadurch, dass** das Ankopplungselement (16) nach unten durch zwei im wesentlichen parallele Wände (54) verlängert ist, wobei eine an jeder Seite mindestens eine durchgehende Ausnehmung (50, 51) umgibt.

14. Befestigungsklammer nach Anspruch 9 **gekennzeichnet dadurch, dass** der Klammerkopf (39) und das vordere Ende der Halterung (47) jeweils eine Schrägkante (44, 48) aufweist, wobei der eine unter dem anderen und in gegenläufiger Schräge angeordnet ist; sowie **dadurch**, dass der Klammerkopf (39) nach unten durch zwei seitliche Auflagerippen (45) verlängert ist, die, um die Einkeilung des Trägers (5) zu verwirklichen, mit zwei seitlichen Rippen (49) zusammenwirken, die sich von der Oberseite der Halterung (47) erheben.

15. Befestigungsklammer nach einem der vorangehenden Ansprüche, **gekennzeichnet dadurch, dass** diese mit einem Kunststoff auf der Grundlage von Polyamid hergestellt oder durch Glasfasern verstärkt ist oder einen Zusatzstoff enthält, der ihr eine ausreichende Leitfähigkeit zur Durchführung der elektrostatischen Lackierphasen verleiht.

16. Lineares, dekoratives oder funktionelles Element (2), zum Beispiel in der Art eines Stabes, eines Bandes, einer Leiste, einer Zierblende für die Karosserie-Gürtellinie oder -Schwellenbereich, das dazu bestimmt ist, gegen einen Träger (5) gedrückt und auf diesen montiert zu werden, speziell auf die Karosserie (6) eines Straßenfahrzeugs, inbesondere in der Art eines Personenkraftwagens, **gekennzeichnet dadurch, dass** es auf seiner Innenseite (4) mindestens eine Befestigungsklammer mit zwei Haltepositionen (12) nach einem der vorangehenden Ansprüche umfasst.

17. Lineares Element (2) nach dem vorangehenden Anspruch, **gekennzeichnet dadurch, dass** es außerdem mindestens eine Sicherheits-Längsbefestigungsvorrichtung umfasst, sowie **dadurch**, dass diese Sicherheits-Längsbefestigungsvorrichtung lang genug ist, um das lineare Element (2) ebenfalls längs in abgewandter Vormontage-Position auf einem Abstand des Trägers (5) zu verriegeln.
